(19) Europäisches Patentamt
European Patent Office
Office européen des brevets

(11) Veröffentlichungsnummer: **0 314 824**
**A1**

(12) # EUROPÄISCHE PATENTANMELDUNG

(21) Anmeldenummer: **87116139.4**

(22) Anmeldetag: **03.11.87**

(51) Int. Cl.⁴: **B23Q 3/12**

(43) Veröffentlichungstag der Anmeldung:
**10.05.89 Patentblatt 89/19**

(84) Benannte Vertragsstaaten:
**AT CH DE ES FR GB IT LI**

(71) Anmelder: **Waldrich Siegen Werkzeugmaschinenbau GmbH**
**Daimlerstrasse 24**
**D-5909 Burbach(DE)**

(72) Erfinder: **Lewis, Henry Walter**
**8239 Beach Drive**
**Rockford Illinois 61103(US)**
Erfinder: **van Roojen, Jan**
**2515 Starkweather Road**
**Rockford Illinois 61107(US)**

(74) Vertreter: **Müller, Gerd et al**
**Patentanwälte**
**HEMMERICH-MÜLLER-GROSSE-POLLMEIER--MEY Hammerstrasse 2**
**D-5900 Siegen 1(DE)**

(54) **Mehrachsen- bzw. Universal-Fräsmaschine.**

(57) Es wird eine Mehrachsen- bzw. Universal-Fräsmaschine vorgeschlagen, die in weiten Grenzen an unterschiedliche Fräsbedingungen und -funktionen angepaßt werden kann. Sie hat einen Hauptspindelkopf, dem für das Aufbringen unterschiedlicher Antriebsleistungen an der eigentlichen Frässpindel verschiedene Arbeitsspindelköpfe zugeordnet werden können. Darüber hinaus ist der Hauptspindelkopf so ausgeführt, daß er auch einen Arbeitsspindelkopf mit einem in die fünfte Achse führenden Bewegungsablauf antreiben kann. Die mit dem Hauptspindelkopf kuppelbaren einzelnen Arbeitsspindelköpfe sind jeweils für einen bestimmten Bearbeitungsvorgang ausgelegt und können nach selektiver Auswahl automatisch mit dem Hauptspindelkopf verbunden werden.

FIG. 2

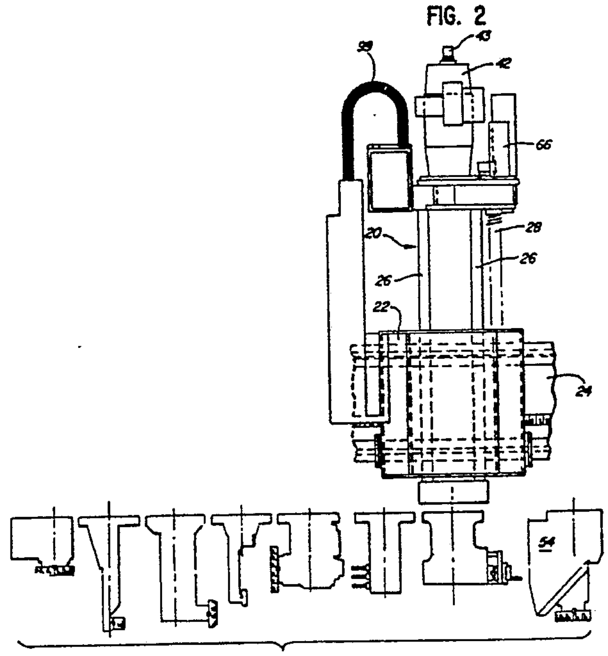


EP 0 314 824 A1

# Mehrachsen- bzw. Universal-Fräsmaschine

Die Erfindung betrifft eine Mehrachsen- bzw. Universal-Fräsmaschine mit einem Hauptspindelkopf und mindestens einem von diesem lösbar und auswechselbar getragenen Arbeitsspindelkopf.

Durch die DE-OS 27 11 162 gehört ein Fräskopf mit einer drehbaren Spindel zum Stand der Technik, der auch bei Mehrachsen- bzw. Universal-Fräsmaschinen benutzt werden kann und an dem dabei ein Bearbeitungswerkzeug anbringbar ist. Dieser bekannte Fräskopf umfaßt dabei einen Hauptspindelkopf und einen an diesem durch Schrauben lösbar und auswechselbar befestigten Arbeitsspindelkopf. Es ist dabei möglich den Arbeitsspindelkopf auszutauschen, wenn die Fräsmaschine, bspw. Mehrachsen- bzw. Universal-Fräsmaschine für unterschiedliche Bearbeitungsvorgänge umgerüstet werden soll.

Eine Variationsfähigkeit der Fräsmaschinen durch Benutzung austauschbarer Arbeitsspindelköpfe ist zweckmäßig, weil hierdurch deren Einsatzbereich beträchtlich vergrößert werden kann, obwohl die Konstruktionsbedingungen für die Lagerstellen der Spindeln nur einen begrenzten Drehzahl-bzw. Leistungsbereich zulassen.

Zur Verbesserung der Vielseitigkeit der Fräsmaschinen ist es auch schon bekannt, der Spindel derselben ein Wechselsystem zuzuordnen, mit dem die Fräsköpfe oder Fräswerkzeuge schnell und zügig sowohl von der Antriebsspindel entfernt als auch auf diese wieder so aufgesetzt werden können, daß sie sicher antreibbar sind.

Es hat sich aber gezeigt, daß Fräsmaschinen der bekannten Bauart beim Einsatz in automatisierten Bearbeitungszentren problematisch sind, weil sie sich nur in begrenztem Maße zur Ausführung der dort anfallenden, verschiedensten Bearbeitungsvorgänge benutzen lassen.

Der Erfindung liegt nun die Aufgabe zugrunde, eine Mehrachsen- bzw. Universal-Fräsmaschine zu schaffen, deren Hauptspindelkopf auf einfache und sichere Art und Weise das Ankuppeln einer beträchtlichen Anzahl von zweckgebundenen, nachgeschalteten Arbeitsspindelköpfen ermöglicht und sich dabei auch in besonderem Maße für den Einsatz in automatisierten Bearbeitungszentren eignet. Hierbei kommt es besonders darauf an, daß die an den Hauptspindelkopf anzuschließenden, unterschiedlichen Arbeitsspindelköpfe automatisch gewechselt werden können, ohne das an ihnen selbst der Werkzeugwechsel durch eine Werkzeugwechselautomatik beeinträchtigt wird.

Es ist aber auch wichtig, daß der Hauptspindelkopf eine solche Auslegung erhalten kann, daß er bei moderaten Drehzahlen eine beträchtliche Antriebsleistung auf die Kupplung der ihm umschaltbar nachgeordneten Arbeitsspindelköpfe übertragen kann, derart, daß in jeder Spindelausrichtung mit größeren oder kleineren Antriebsdrehzahlen gearbeitet werden kann, wie dies von flexiblen Bearbeitungssystemen gefordert wird.

Gelöst wird diese Aufgabe unter Benutzung einer Mehrachsen-bzw. Universal-Fräsmaschine mit einem Hauptspindelkopf und einem von diesem lösbar und auswechselbar getragenen Arbeitsspindelkopf nach der Erfindung grundsätzlich dadurch, daß der Hauptspindelkopf als Revolverkopf-Schlitten ausgebildet ist und an einem Maschinenschlitten sitzt;

daß der Maschinenschlitten in zwei zueinander orthogonalen Richtungen linear beweglich geführt ist und den Hauptspindelkopf wiederum in einer Richtung längsbeweglich trägt, die jeweils rechtwinklig zu seinen eigenen Bewegungsrichtungen orientiert ist;

daß im Hauptspindelkopf eine Hohlwelle drehbar gelagert ist, die mit dessen Längsachse fluchtet und an ihrem Ende einen Revolverkopf trägt, dessen Stirnseite eine Kupplungsfläche für den Arbeitsspindelkopf bildet;

daß koaxial in der Hohlwelle eine Antriebswelle angeordnet und an ihrem hinteren, vom Revolverkopf abgewendeten Ende mit einem Antriebsmotor verbunden ist;

daß die Antriebswelle an ihrem dem Revolverkopf benachbarten Ende eine dessen Kupplungsfläche zugeordnete Kupplungsvorrichtung trägt, daß der Arbeitsspindelkopf im Bereich seiner der Kupplungsfläche des Revolverkopfes zugeordneten Gegenkupplungsfläche eine Gegenkupplungsvorrichtung zur Antriebswelle des Hauptspindelkopfes aufweist;

daß der Kupplungsfläche des Revolverkopfes mehrere um seine Drehachse gleichmäßig verteilt angeordnete, lösbare Greifervorrichtungen zugeordnet sind;

daß die Gegenkupplungsfläche des Arbeitsspindelkopfes mehrere den Greifervorrichtungen des Revolverkopfes zugeordnete und von diesem erfaßbare Arretierknöpfe trägt,

und daß auf dem Hauptspindelkopf ein Stellmotor montiert ist, der einen Drehantrieb für den Revolverkopf und den jeweils mit diesem lösbar gekuppelten Arbeitsspindelkopf bildet.

Ein weiteres wichtiges Erfindungsmerkmal besteht auch darin, daß die Hohlwelle bzw. der Revolverkopf mindestens einen weiteren Stellmotor trägt, durch den eine parallel zur Drehachse des Revolverkopfes angeordnete und in diesem drehbar gelagerte Welle antreibbar ist, welche wiederum eine der Kupplungsfläche des Revolverkopfes zugeordnete Kupplungsvorrichtung hat, und daß im Arbeitsspindelkopf eine zugehörige Welle mit einer komplementären Gegenkupplungsvorrichtung sitzt, über die der Arbeitsspindelkopf für eine Bewegung in seiner fünften Achse antreibbar ist.

Nach der Erfindung ist darüber hinaus der Revolverkopf an seiner Kupplungsfläche mit Elektro- und Druckmittel-Kupplungselementen versehen, denen komplementäre Gegegenkupplungselemente der Gegenkupplungsfläche des Arbeitsspindelkopfes zugeordnet sind. Dabei werden die Greifervorrichtungen des Revolverkopfes über elektrisch ansteuerbare Hydraulikventile betätigt und die Druckmittelzuführung zum Revolverkopf wird durch zwischen der Hohlwelle und dem Hauptspindelkopf eingebaute Drehmuffen-Verbindungen gebildet während zur Übertragung der elektrischen Energie Schleifring- und Bürsteneinrichtungen zwischen der Hohlwelle und dem Hauptspindelkopf angeordnet sind.

Weitere Ausgestaltungen der Erfindung sind den Ansprüchen 4 bis 7 zu entnehmen.

Die Erfindung wird nachstehen an einem in der Zeichnung dargestellten Ausführungsbeispiel näher erläutert. Dabei zeigen

Figur 1 in schematischer Darstellung den mit einem Arbeitsspindelkopf zusammenwirkenden Hauptspindelkopf einer Fräsmaschine,

Figur 2 in größerem Maßstab eine Seitenansicht des Hauptspindelkopfes nach Fig. 1 oberhalb einer Reihe von zum Kuppeln mit diesem bestimmten, auswechselbaren Arbeitsspindelköpfen, wobei der Hauptspindelkopf bspw. auf dem Querbalken einer Portal-Fräsmaschine montiert und relativ zu diesem in Vertikalrichtung verstellbar ist, die

Fig. 3.1, 3.2 und 3.3 jeweils zusammengehörende Querschnittsabschnitte, des Hauptspindelkopfes nach Fig. 2,

Figur 4 in größerem Maßstab und ausführlicher Darstellung einer Ansicht von unten zu dem in Fig. 3.3 dargestellten Querschnittsabschnitt des Hauptspindelkopfes,

Figur 5 in räumlicher Ansichtsdarstellung von oben die erfindungswesentliche Kupplungsfläche eines Arbeitsspindelkopfes,

Figur 6 einen Schnitt entlang der Linie 6-6 in Fig. 3.1,

Figur 7 eine Ansicht in Pfeilrichtung 7-7 der Fig. 6 und

Figur 8 in einer teilweise geschnittenen Seitenansicht und größerem Maßstab die Kupplungselemente für Hydraulikanschlüsse, wie sie den Kupplungsflächen von Hauptspindelkopf und Arbeitsspindelkopf zugeordnet sind.

Bei dem bevorzugten Ausführungsbeispiel der Erfindung hat der als Revolverkopfschlitten ausgeführte Hauptspindelkopf 20 eine längliche, kastenartige Ausführung. Er ist in einem Maschinenschlitten 22 angeordnet und läßt sich darin in seiner Längsrichtung gleitend bewegen.

Wenn die Fräsmaschine als Brücken- oder Portal-Fräsmaschine ausgeführt ist, ist der Maschinenschlitten 32 an dem Querträger 24 horizontal beweglich, während der Hauptspindelkopf 20 am Maschinenschlitten 22 in Vertikalrichtung bewegt werden kann. Diese Anordnung ist in Fig. 2 der Zeichnung bspw. dargestellt.

Bei einer Ständer-Fräsmaschine ist hingegen der Maschinenschlitten 22 vertikal beweglich geführt, während der Hauptspindelkopf 20 dann an diesem Maschinenschlitten 22 horizontal längsbeweglich gehalten wird.

Da bestimmte Eigenschaften und Merkmale des in der Zeichnung dargestellten Ausführungsbeispiels für die Vertikalausrichtung des Revolverkopf-Schlittens von besonderer Bedeutung sind, wird die Erfindung der Einfachheit halber lediglich anhand des vertikal ausgerichteten Revolverkopf-Schlittens erläutert.

Aus Fig. 2 der Zeichnung sind andeutungsweise die rechtwinklig eingezogenen Eckzonen des Hauptspindelkopfes 20 gezeigt, welche deutlicher in den Fig. 4 und 6 erkennbar sind. Diese eingezogenen Eckzonen bilden dabei jeweils Gleitflächen 26, mit deren Hilfe der Hauptspindelkopf 20 im Maschinenschlitten 22 gleitbeweglich gehalten und geführt wird. Als Antrieb für die längsgerichtete Verstellbewegung des Hauptspindelkopfs 20 relativ zum Maschinenschlitten 22 dient ein an letzterem angeordneter bzw. montierter Stellmotor mit einer Gewindespindel 28, die wiederum mit einer Führungsmutter zusammenarbeitet, welche im Maschinenschlitten verdeckt angeordnet ist.

Am Hauptspindelkopf 20 und am Maschinenschlitten 22 wird der Bewegungsablauf von elektromagnetisch arbeitenden, linearen Wegmeßfühlern kontrolliert und überwacht.

Bei der vorstehend erläuterten Anordnung handelt es sich um die von Fachleuten ganz allgemein als Z-Achsen-Antrieb bezeichnete Bauart, welche der Einfachheit halber zur Verdeutlichung ihrer wesentlichen Eigenschaften und Merkmale lediglich in Fig. 2 der Zeichnung gezeigt wurde.

Fig. 3.1 zeigt zusammen mit Fig. 3.2 und Fig. 3.3 in ausführlicher Darstellung und größerem Maßstab den Hauptspindelkopf 20 nach den Fig. 1 und 2 der Zeichnung im Längsschnitt. Dabei ist zu sehen, daß innerhalb des Hauptspindelkopfes 20 ein sich über dessen ganze Länge erstreckendes Spindelsystem angeordnet und drehbar gelagert ist. Die Fig. 3.1, 3.2 und 3.3 lassen dabei erkennen, daß zu diesem Spindelsystem eine Hohlwelle 30 gehört, welche in der Nähe ihres oberen Endes in Kugellagern 32 drehbar gehalten ist, die wiederum in einer Zwischenwand 34 des Hauptspindelkopfs 20 sitzen. Am unteren Ende der Hohlwelle 30 ist zur Bildung einer Baueinheit mit dieser ein Revolverkopf 36 befestigt, welcher seinerzeit wiederum in einem zu einer unteren Zwischenwand des Hauptspindelkopfes 20 gehörenden, kombinierten Axial- und Radial-Rollenlager 38 von großem Durchmesser drehbar gelagert ist, wie das die Fig. 3.3 deutlich zeigt.

Innerhalb der Hohlwelle 30 und koaxial hierzu ist eine Antriebswelle 40 angeordnet, die unabhängig von der Hohlwelle 30 beweglich ist und drehangetrieben werden kann.

Dem oberen Ende dieser Antriebswelle 40 ist ein Antriebsmotor 42 zugeordnet, wie das in den Fig. 1, 2 und 3.1 zu sehen ist. Das untere Ende der Antriebswelle 40 ist hingegen mit einer Flanschfläche 44 versehen, die eine diametral verlaufende Keilnut 46 enthält, wie das aus den Fig. 3.3 und 4 deutlich hervorgeht.

In der Keilnut 46 sind dabei zwei Keile 48 aufgenommen, und zwar befinden sie sich jeweils in der Nähe der Umfangsbegrenzung der Flanschfläche 44, wo sie mit der Antriesbwelle 40 verschraubt sind.

Eine der Keilnut 46 entsprechende, diametral verlaufende Keilnut 50 befindet sich in einer Gegenflanschfläche 52 einer ansonsten nicht dargestellten Abtriebswelle eines dem Hauptspindelkopf 20 auswechselbar zuzuordnenden Arbeitsspin delkopfes 54, wie das deutlich der Fig. 5 entnommen werden kann. Dabei können die Keile 48 formschlüssig mit der Keilnut 50 in der Gegenflanschfläche 52 der ansonsten nicht dargestellten Abtriebsspindel des Arbeitsspindelkopfes 54 zum Eingriff gebracht werden, wie das die Fig. 4 und 5 erkennbar machen.

Das obere Ende der Antriebswelle 40 ist gemäß Fig. 3.1 in einem zur Zwischenwand 58 des Hauptspindelkopfes 20 gehörenden Kugellager 56 gelagert, während ihr unteres Ende gemäß Fig. 3.3 in den zum drehbaren Revolverkopf 36 gehörenden Lagern 62 aufgenommen ist.

In der Zwischenwand 58 ist aber auch das Zahnradgetriebe 60 gelagert, welches den Drehantrieb für die sogenannte C-Achse bildet, die wiederum von der Hohlwelle 30 und dem damit drehfest verbundenen Revolverkopf 36 bestimmt wird.

Das für die Drehbewegung der C-Achse, also des aus der Hohlwelle 30 und dem Revolverkopf 36 bestehenden Spindelsystems, vorgesehene Antriebssystem umfaßt einen Zahnkranz 64, der nach Fig. 3.1 auf das obere Ende der Hohlwelle 30 aufgeschrumpft ist und auf den die Antriebsleistung eines Stellmotors 66 über ein spielfreies Doppelzahnrad-System übertragen wird. Jedes dieser Doppelzahnrad-Systeme weist dabei ein Ritzel 68 auf, wie es in Fig. 3.1 zu sehen ist. Die Anordnungen des Doppelzahnrad-Systems ist im übrigen in Fig. 6 der Zeichnung nur andeutungsweise zu sehen. Die beiden Ritzel 68 des Doppelzahnrad-Systems sind in jedem Falle so angeordnet und ausgebildet, daß sie - zur Erzielung der Spielfreiheit -mit einander zugewendeten Zahnflanken des Zahnkranzes 64 in Eingriff stehen.

Da die beiden Zahnradsysteme die Übertragung der Antriebsleistung in einer der Fachwelt bekannten Art und Weise unter Benutzung eines für zueinander entgegengesetzte Drehrichtungen ausgelegten, doppelten Schrägzahn-Stirnrades bewerkstelligen, das mittels Federdruck zur Umkehrung der Drehrichtung axial verschoben werden kann, ist das vollständige C-Achsen-Getriebe in Fig. 1 der Einfachheit halber nur als ein einziges Getriebe dargestellt und in Fig. 3.1 zum größten Teil weggelassen worden.

Nach Fig. 3.2 sind unter den Lagern 32 zwischen dem Hauptspindelkopf 20 und der Hohlwelle 30 jeweils Drehbewegungs-Meßfühler 70 vorgesehen, welche die für die Steuerung und Regelung des C-Achsen-Antriebs notwendige Positionsrückmeldung ermöglichen. Hierdurch können Fehlanpassungen in der jeweiligen Ausrichtung der in die untere Flanschfläche der Antriebswelle 40 eingearbeiteten Keilnut 48 relativ zu der ihr komplementären Keilnut 50 auf der Gegenkupplungsfläche 52 des nachgeordneten Arbeitsspindelkopfes 54 vermieden werden, weil die Drehbewegung der Antriebswelle 40 in einer für den Kupplungsvorgang vorgegebenen Drehwinkelposition von der zum Antriebsmotor 42 gehörenden Steuerungs- und Regelschaltung abgeschaltet und zum Stillstand gebracht wird. Der zu dieser Schaltung gehörende Drehmelder bzw. Resolver 43, wie er in den Fig. 1 und 2 dargestellt ist, signalisiert hierbei jeweils die für den Kupplungsvorgang exakte Positionierung der Drehwinkellage.

Damit für den Kupplungsvorgang eine fest verriegelte Ausrichtung der Antriebswelle 40 gewährleistet wird, ist unterhalb der oberen Zwischenwand 58 auf das obere Ende der An triebswelle 40 eine Nabe 72 mit vier jeweils im rechten Winkel zueinander liegenden Abflachungen aufgekeilt, von denen eine, nämlich die Abflachung 74, mit einer Mechanik zusammenarbeitet, welche die Antriebswelle 40 in einer vorbestimmten Kupplungsausrichtung zwangsläufig verriegelt.

Die Verriegelungsmechanik besteht dabei, wie insbesondere aus den Fig. 6 und 7 hervorgeht, aus einem Hebel 76, welcher Rollen 78 trägt, die dann mit der Abflachung 74 in Berührungskontakt kommen, wenn der Hebel 76 von einem doppelt wirkenden Druckluftzylinder 80 in die Verriegelungsposition gebracht wird. Durch Druckbeaufschlagung des doppelt wirkenden Druckluftzylinders 80 in der entgegengesetzten Richtung werden hingegen über den Hebel 76 die Rollen 78 aus dem Drehbereich der Nabe herausgezogen.

Für die Ausrichtung der Antriebswelle 40 wird nur eine einzige Abflachung 74 der Nabe 72 benötigt. Die zur betriebswirksamen Abflachung 74 um 180° versetzt angeordnete Abflachung ist nur durch den dynamischen Massenausgleich bedingt. Durch die beiden orthogonal angeordneten und ausgerichteten, für den Betrieb nicht funktionsnotwendigen Abflachungen wird erreicht, daß beim Einarbeiten der Keilnut 46 in die Flanschfläche 44 der Antriebswelle 40 keine unerwünschten Positionsabweichungen auftreten können.

In Fig. 4 der Zeichnung ist der Hauptspindelkopf 20 in einer Ansicht von unten gezeigt. Hierbei ist zu erkennen, daß am Revolverkopf 36 vier spannzangenartige Greifer 82 satellitenartig und im gleichen Abstand um die gemeinsame Drehachse von Revolverkopf 36 und Antriebswelle 40 angeordnet sind.

Bei diesen Greifern 82 kann es sich um sogenannte OTT-Greifer handeln, wie sie allgemein bei automatisierten und für den Werkzeugwechsel eingerichteten Spindeln von Fräsmaschinen als Werkzeuggreifer eingesetzt werden. Für den vorliegenden Anwendungsfall sind jedoch diese OTT-Greifer geringfügig abgeändert worden.

Die in Fig. 3.3 gezeigten Greifer 82 werden zum Lösen der Verbindung durch einen Zylinder 84 - hydraulisch - betätigt. Das Spannen der Greifer 82 erfolgt hingegen üblicherweise durch das Federsystem 83.

Die durch den besonderen Anwendungszweck bedingte Änderung der Greifer 82 besteht im vorliegenden Falle darin, daß die Haltekraft des Federsystems 83 - vorzugsweise hydraulisch -durch einen zweiten Zylinder 86 verstärkt wird, dessen Kolben 87 die Betätigungsstange 88 des Greifers umschließt, während die sogenannten OTT-greifer 82 normalerweise nur durch ein Paket von Belleville-Federscheiben 83 im Schließzustand gehalten werden.

Jeder der vier Greifer 82 ist so konstruiert und ausgeführt, daß er mit einem zu ihm komplementären und entsprechend angeordneten Arretierungsknopf bzw. Stiftbolzen 90 in Wirkverbindung treten kann, der auf der Gegenkupplungsfläche des mit dem Hauptspindelkopf 20 jeweils in Wirkverbindung zu bringenden Arbeitsspindelkopfes 54 angeordnet ist.

In Fig. 3.3 der Zeichnung ist ein solcher Arretierungsknopf bzw. Stiftbolzen in gestrichelten Linien angedeutet, während Fig. 5 in räumlicher Darstellung die Anordnung von vier solcher Arretierungsknöpfe bzw. Stiftbolzen 90 zeigt, die in gleichmäßiger Verteilung um die Längsachse des Arbeitsspindelkopfes 54 verteilt von der Gegenkupplungsfläche vorstehen.

Zwischen dem auswechselbaren Arbeitsspindelkopf 54 und dem Revolverkopf 36 des Hauptspindelkopfes 20 ist eine exakte Ausrichtung weiterhin noch durch eine Positionierungsverriegelung gewährleistet, welche auf der Kupplungsfläche des Revolverkopfes 36 nur drei von vier Greifern so zugeordnet ist, daß sie mit diesen zusammenarbeiten kann.

Bei der Positionierungsverriegelung handelt es sich jeweils um eine im wesentlichen rechteckförmige Ausnehmung 92, die jeweils einen von drei auf der Gegenkupplungsfläche des Arbeitsspindelkopfes 54 im gleichen Winkelabstand und präzis angeordneten Paßblöcken 94 komplementär aufnimmt.

Sobald der Hauptspindelkopf 20 auf den Abstellplatz eines Arbeitsspindelkopfes 54 axial und auch drehwinkelbezogen einigermaßen ausgerichtet ist, wie das in Fig. 2 angedeutet wird, dann kann der notwendige Kupplungsvorgang eingeleitet werden. Hierzu wird zunächst der Hauptspindelkopf 20 durch eine in Richtung der Z-Achse erfolgende Linearbewegung dem jeweiligen Arbeitsspindelkopf 54 allmählich genähert, bis er mit diesem unter exakter Drehwinkelausrichtung eine Vereinigungsposition einnimmt. Dann werden die Greifer 82 um die Arretierungsknöpfe bzw. Stiftbolzen 90 geschlossen, wodurch Hauptspindelkopf 20 und Arbeitsspindelkopf 54 exakt miteinander gekuppelt sind. Dabei ist auch die im Hauptspindelkopf 20 gelagerte Antriebswelle 40 kraftschlüssig mit der Eingangskupplung 52 des Arbeitsspindelkopfes 54 in Verbindung gebracht.

Wie die Fig. 4 erkennen läßt, befindet sich an der Kupplungsfläche des Hauptspindelkopfes 20 noch eine Kupplungsmuffe 96 mit einem Kupplungseingriff, der im wesentlichen dreieckförmig begrenzt ist. Diese Kupplungsmuffe 96 bildet dabei den einen Teil einer polygonalen Kupplung für den B-Achsen-Antrieb eines Arbeitsspindelkopfes 54.

Diese Kupplungsmuffe 96 ist dabei auf der Winkelhalbierenden zwischen zwei Greifern 82 angeordnet, deren Winkelabstand voneinander 90° beträgt. wichtig ist dabei, daß die Kupplungsmuffe 96 zwischen zwei Greifern 82 liegt, denen jeweils eine im wesentlichen rechteckförmige Ausnehmung 92 der bereits beschriebenen Positionierungsverriegelung zugeordnet ist. Damit hat die Kupplungsmuffe 96 einen relativ großen Winkelabstand (135°) von demjenigen Greifer 82, welchem keine zur Positionierungsverriegelung gehörende Ausnehmung 92 zugeordnet ist.

Der Antrieb für die B-Achse besteht nach Fig. 3.3 aus einem Servo- bzw. Stellmotor 97, der parallel zur Achse des Revolverkopfes 36 auf dessen Rückseite angeordnet und montiert ist.

Dieser Servo- bzw. Stellmotor 97 ist als direkt antreibender Achsmotor ausgeführt. welcher am vorderen Ende einer Welle die Kupplungsmuffe 96 für den B-Achsen-Antrieb trägt und dabei koaxial zur Motorwelle in Kugellagern läuft, die wiederum im Revolverkopf 36 sitzen. Die diesem Servo- bzw. Stellmotor 97 zugeordneten Steuerungs- und Regelungssystems können mit für die Rückmeldung geeigneten Positionsmeßfühlern im Hauptspindelkopf 20 in Verbindung stehen.

Der zusätzliche B-Achsen-Antrieb wird für Arbeitsspindelköpfe 54 benutzt, die eine zweite Bewegungsachse aufweisen. Ein solcher Arbeitsspindelkopf ist bspw. durch die US-PS 4 370 080, als sogenannter kreisender Spindelkopf bekannt. Er weist dabei ein zu den Paßflächen der Kupplungsmuffe 96 komplementäres, polygonales Kupplungselement 98 auf, wie es in Fig. 5 der Zeichnung dargestellt ist und das auf die Kupplungsmuffe 96 exakt ausgerichtet wird.

Damit die Kupplungsmuffe 96 das zu ihr komplementäre, konisch geformte Kupplungselement 98 des Arbeitsspindelkopfes 54 aufnehmen kann, hat auch die Kupplungsmuffe 96 eine konische Form, wie das der Fig. 4 in Verbindung mit der Fig. 3.3 deutlich entnommen werden kann. Durch die polygonale Ausgestaltung und die gegenseitige konische Anpassung der beiden Kupplungselemente 96 und 98 wird erreicht, daß beim Kupplungsvorgang zwischen diesen selbsttätig alle kleineren Fehlausrichtungen korrigiert werden, womit sichergestellt ist, daß die Funktionsintegrität des Steuerungssystemes für die B-Achse erhalten bleibt.

Der B-Achsen-Antrieb und der C-Achsen-Antrieb tragen gemeinsam und gleichwertig dazu bei, daß ein Werkzeug, welches in den Arbeitsspindelkopf 54 eingespannt ist, jederzeit richtig und genau zugeführt und plaziert werden kann.

Zwischen dem Revolverkopf 36 des Haupspindelkopfes 20 und einem Arbeitsspindelkopf 54 sind auch die für den Betrieb dieses Arbeitsspindelkopfes 54 erforderlichen Elektroanschlüsse, Hydraulikanschlüsse und Druckluftanschlüsse vorgesehen. Diese sind dabei zusätzlich zu den für die Steuerung der C-Achse erforderlichen Kupplungsverbindungen und auch zusätzlich zur kraftschlüssigen Verbindung zwischen der Antriebswelle 40 und der Eingangskupplung 52 und schließlich auch zusätzlich zu den Kupplungselementen 96 und 98 für die Steuerung der B-Achse vorgesehen.

An den Hauptspindelkopf 20 sind diese Energiezuführungs-Systeme gemäß Fig. 2 über ein flexibles Panzerrohr 99 angeschlossen. Sie werden von dort aus unter die Lager 32 für die Hohlwelle 30 in das Innere des Hauptspindelkopfes 20 über entsprechende Elektro- und Druckmittelanschlüsse an die Hohlwelle 30 herangeführt, wie das aus Fig. 3.2 hervorgeht. Hierbei wird eine für die Druckmittelzufuhr, insbesondere Flüssigkeitszufuhr, dienende Drehmuffe 100 unmittelbar unter den Lagern 32 angeordnet. Diese Drehmuffe 100 umfaßt dabei eine Reihe von in die Außenfläche der Hohlwelle 30 eingedrehten Umfangsnuten 102, die zweckmäßigerweise in engem Abstand zueinander angeordnet sind. Darüber hinaus ist auch eine entsprechende Reihe von zu den Umfangsnuten 102 komplementären Innenumfangsnuten 104 vorgesehen, die in einen Mantel 106 des Drehflansches 100 eingearbeitet sind. Der Mantel 106 bildet dabei das stationäre Element der Drehmuffe 100.

Jeder Druckmittelkanal ist gegenüber dem benachbarten dadurch abgetrennt, daß einer jeden in den Außenumfang der Hohlwelle 30 eingearbeiteten Umfangsnut 102 jeweils zwei Dichtungsmanschetten 108 zugeordnet sind. Diese Dichtungsmanschetten 108 liegen jeweils einerseits an der Innenfläche des stationären Mantels 106 an und sind andererseits auch in besonderen Umfangsnuten der Hohlwelle 30 aufgenommen, diesen Umfangsnuten 102 benachbart liegen.

Die durch den stationären Mantel 106 der Drehmuffe 100 führende Druckmittel- bzw. Flüssigkeitszufuhr erfolgt über Radialbohrungen 110, welche ihrerseits wiederum zu den ihnen jeweils zugeordneten Innenumfangsnuten 104 des Mantels 106 geführt sind.

In der Hohlwelle 30 werden die Druckmittel bzw. Flüssigkeiten von den Umfangsnuten 102 aus über Radialbohrungen 112 mehreren Einzelkanälen 114 zugeführt, welche im Tiefbohrverfahren in Längsrichtung der Hohlwellenwandung eingearbeitet sind, um von dort aus durch eine andere Radialbohrung 116 (Fig. 3.3) aus der Hohlwelle 30 in geeignete Leitungen zu gelangen. Über diese Leitungen werden dann die Druckmittel bzw. Flüssigkeiten den jeweils zutreffenden Anschlüssen auf der Kupplungsfläche des Revolverkopfes 36 zugeführt.

Aus Fig. 3.2 ergibt sich, daß zwei Kanäle des Drehflansches 100 für die Kühlmittelzuführung zur Spindel verwendet werden. Fünf weitere Kanäle der Drehmuffe 100

- für die Zufuhr der Hydraulikflüssigkeit zu den Greifern 82;
- als Zuleitung für die Hydraulikflüssigkeit;
- als Rückleitung für die Hydraulikflüssigkeit;
- als Zu- und Rückleitung für einen Schmierölkreislauf;
- für die Druckluftzuführung zur Kupplungsfläche des Revolverkopfes 36.

Mit der Druckluft werden die Kupplungsfläche des Revolverkopfes 36 und die Gegenkupplungsfläche des Arbeitsspindelkopfes 54 abgeblasen, bevor sie miteinander in Kontaktbe rührung gelangen. Mit der Druckluft kann aber auch das in den Arbeitsspindelkopf 54 eingesetzte Werkzeug abgeblasen werden.

Bei den beiden Endkanälen der Drehmuffe 100, sowie bei dem Kanal, welcher zwischen den beiden Kühlmittelkanälen und den Schmierölkanälen sowie den Druckluftkanälen angeordnet ist, handelt es sich jeweils um Abflußkanäle zum Sammeln und Abführen von Leckargen, um zu verhindern, daß innerhalb des Hauptspindelkopfes unerwünschte Verschmutzungen aufgrund der Leckarge Flüssigkeiten entstehen.

Infolge der reltiv hohen und kumulativen Reibungsbelastungen durch die zwischen den Kanälen angeordneten Dichtungsmanschetten 108, ist der Mantel 106 der Drehmuffe 100 in den Kugellagern gehalten, welche an der Hohlwelle 30 abgestützt sind. Dem oberen Ende der Drehmuffe 100 ist ein von einem Bolzen in einem an der Innenwand des Hauptspindelkopfes 20 befestigten Gabelkopf 122 gehaltener, dicker Hebelarm 120 zugeordnet, der verhindert, daß sich der Außenmantel 106 der Drehmuffe 100 mit der Hohlwelle 30 drehen kann.

Unterhalb der Drehmuffe 100 ist der Hohlwelle 30 ein Bürstenhalterkasten 124 herkömmlicher Art für die Elektroanschlüsse zugeordnet. Innerhalb dieses Bürstenhalterkastens 124 befinden sich dabei eine oder mehrere Bürsten für jeden der mit der Hohlwelle 30 rotierenden Mehrfach-Schleifringe. Auch hier verhindert ein von einem an der Innenseite des Hauptspindelkopfs 20 befestigten Gabelkopf 128 gehaltener Hebelarm 126, daß sich der Bürstenhalterkasten 124 mit der Hohlwelle 30 drehen kann. Der Gabelkopf 128 und der Hebelarm 126 sind dabei in Fig. 3.3 deutlich zu sehen.

Im Bereich zwischen dem Bürstenhalterkasten 124 und dem Revolverkopf 36 sind innerhalb des Hauptspindelkopfes 20 gemäß Fig. 3.3 nicht nur die Greifer 82 mit den zugehörigen Zylindern 84 und 86 sowie den Federsäulen 83 angeordnet. Vielmehr befindet sich dort auch der Antriebsmotor 97 für die B-Achse. Es sind dort aber auch noch die Druckluft- und/oder Hydraulik-Magnetventile 130, 132 und 134 vorgesehen. Eines derselben dient dabei zur Betätigung der vier Greifer 82 am Revolverkopf 36. Ein zweites steuert die Druckluftzufuhr zum Abblasen der sich einander nähernden Kupplungs- und Gegenkupplungsflächen von Revolverkopf 36 und Arbeitsspindelkopf 54, während das dritte Magnetventil der hydraulischen Betätigung von Werkzeuggreifern dienlich ist, die der Werkzeugträgerspindel des Arbeitsspindelkopfes 54 zugeordnet sind.

Der Bürstenhalterkasten 124 bildet einen Schaltungsbaustein, der einerseits zur allgemeinen Stromversorgungsschaltung dient, andererseits aber auch zur Steuerungs- und Regelungsschaltung des Stellmotors 97 für die B-Achse benutzt werden kann. Schließlich dient er aber auch noch zur Bildung der Steuerstromkreise für die Druckluft- und Hydraulik-Magnetventile 130, 132 und 134, die innerhalb des Hauptspindelkopfes an der Hohlwelle 30 bzw. auf dem Revolverkopf 36 angeordnet sind.

Bei den zum jeweiligen Arbeitsspindelkopf 54 führenden Elektroanschlüssen sowie Hydraulik- und Druckluftanschlüssen handelt es sich um selbstkoppelnde Anschlüsse. Sie sind dabei gemäß Fig. 4 als Gruppe innerhalb eines Ringsektorbereiches zwischen zwei Greifern 82 an bzw. in der Kupplungs fläche des Revolverkopfes 36 angeordnet, wobei dieser Sektor unmittelbar demjenigen Sektor benachbart liegt in welchem sich die Kupplungselemente 96 bzw. 98 für den Antrieb der B-Achse befindet.

Mit Hilfe der als Mehrfachstecker ausgebildeten elektrischen Steckvorrichtung 136 werden dabei die Meßfühleranschlüsse zum jeweiligen Arbeitsspindelkopf 54 hergestellt. Die Steckvorrichtungen für die Herstellung der Druckmittel und Flüssigkeitsverbindungen zum jeweiligen Arbeitsspindelkopf 54 werden mit selbstschließenden Steckverbindern hergestellt, wie sie bspw. in Fig. 8 der Zeichnung gezeigt sind. Es handelt sich hierbei um sogenannte HANSEN-Steckverbinder.

Jeweils ein solcher Steckverbinder ist nach den Fig. 4 und 5 vorgesehen zur Bildung der Anschlüsse

- zur Zuleitung und Rückleitung der Hydraulikflüssigkeit, welche für den einfach wirkenden Hydraulikzylinder benötigt wird, welcher innerhalb des Arbeitsspindelkopfes 54 der Werkzeugspindel zugeordnet ist;
- für die Zu- und Rückleitung des zur Dauerschmierung des im Arbeitsspindelkopf 54 befindlichen Getriebes benötigten Schmiermittels;
- für die Weiterleitung von Schmieröl durch die Spindel und zum Herausführen dieses Schmieröls in den Bereich des Bearbeitungswerkzeuges.

Die Gegenkupplungsfläche eines den größten Ausrüstungsgrad aufweisenden Arbeitsspindelkopfes 54 ist in Fig. 5 der Zeichnung in räumlicher Darstellung zu sehen. Hierbei handelt es sich um einen eine kreisende Bewegung ausführenden Arbeitsspindelkopf 54, wie er bereits weiter oben kurz ange sprochen wurde. Ein solcher Arbeitsspindelkopf 54 ist dabei so ausgelegt, daß er nicht nur eine Bewegung um die C-Achse des Hauptspindelkopfes 20 ausführt, sondern darüber hinaus auch noch einen B-Achsen-Antrieb für eine in eine zweite Achse führende Drehbewegung benutzt.

Obwohl die in Fig. 5 dargestellten Gegenkupplungsfläche des Arbeitsspindelkopfes 54 von der in Fig. 4 dargestellten Kupplungsfläche des Revolverkopfes 36 nach unten geklappt gezeigt wird, ist es ohne weiteres klar, daß die Kupplungsfläche am Revolverkopf 36 des Hauptspindelkopfes 20 und die Gegenkupplungsfläche am Arbeitsspindelkopf 54 in jedem Falle zueinander komplementär passend ausgelegt sind.

Zu erkennen ist deutlich, daß von der Gegenkupplungsfläche des Arbeitsspindelkopfes 54 die vier Stiftbolzen bzw. Arretierknöpfe 90 abstehen. Zu sehen ist aber auch, daß diese Stiftbolzen bzw. Arretierknöpfe 90 in gleichem Winkelabstand zueinander und konzentrisch um die Eingangskupplung 52 verteilt angeordnet sind. Ersichtlich ist aber auch, daß die Keilnut 50 der Eingangskupplung 52 noch vor dem Eingriff in die zur Antriebswelle 40 gehörenden Keile 48 ordnungsgemäß ausgerichtet wird.

Aus Fig. 5 geht aber auch hervor, daß das zum B-Achsen-Antrieb gehörende polygonale Kupplungselemente 98 sich in der Mitte zwischen dem hinteren Stiftbolzen bzw. Arretierknopf 90 und dem rechten Stiftbolzen bzw. Arretierknopf 90 befindet, während der Elektroanschluß 136′ sowie die Druckmittel-und/oder Flüssigkeitsanschlüsse 138′ als Gruppe zwischen dem hinteren Stiftbolzen bzw. Arretierknopf 90 und dem linken Stiftbolzen bzw. Arretierknopf an der Gegenkupplungsfläche des Arbeitsspindelkopfes 54 angeordnet sind.

Die zu den linken und rechten Stiftbolzen bzw. Arretierknöpfen 90 in Radialrichtung nach außen verschoben angeordneten Ausricht- und Führungsblöcke 94 passen zum Zwecke der präzisen Anordnung und Ausrichtung aller Anschlüsse des Arbeitsspindelkopfes 54 zu denen des Revolverkopfes 36 exakt in die Ausnehmungen 92 an der Kupplungsfläche des Revolverkopfes 36.

Man erkennt auch, daß alle vorstehenden und einsteckbaren Elemente eines jeden Kupplungspaares dem Arbeitsspindelkopf 54 zugeordnet sind, während umgekehrt alle Buchsen und Aufnahmeelemente jedes Kupplungspaares sich im Revolverkopf 36 des Hauptspindelkopfes 20 befinden. Ausgenommen hiervon sind lediglich die Führungskeile 48 an der Flanschfläche der Antriebswelle 40, welche das Ankuppeln der Antriebswelle 40 des Hauptspindelkopfes 20 an die Eingangskupplung 52 des jeweiligen Arbeitsspindelkopfes 54 bewirken.

Die vorgesehene, besondere Anordnung der jeweils zu einem Kupplungspaar gehörenden Elemente hat ihren Grund darin, daß die vom Hauptspindelkopf 20 bzw. Revolverkopf 36 angebotenen Anschlußverbindungen nicht von jedem hieran anzukuppelnden Arbeitsspindelkopf 54 genutzt werden. Der in Fig. 5 gezeigte, kreisend bewegte Arbeitsspindelkopf 54 wurde jedoch als Beispiel herangezogen, weil bei ihm alle Anschlußverbindungen vorhanden sind und auch benutzt werden.

Bei einer Brücken- bzw. Portal-Fräsmaschine ist, wie dies bereits eingangs erwähnt wurde, der Hauptspindelkopf 20 in vertikal ausgerichteter Anordnung vorgesehen.

In einem solchen Falle werden die verschiedenen Arbeitsspindelköpfe 54 in einem Spindelkopf-Magazin so ausgerichtet, daß ihre Gegenkupplungsfläche jeweils nach oben gewendet ist, wie das der Fig. 2 entnommen werden kann.

Der jeweils im Spindelkopf-Magazin ausgewählte Arbeitsspindelkopf 54 wird dann vom Hauptspindelkopf 20 mit einer Bewegungsablauf-Kombination angefahren, die auf der X-Achse, der Y-Achse und der Z-Achse stattfindet. Der am Hauptspindelkopf 20 vorgesehene Revolverkopf 36 wird dabei über seine Kupplungsfläche mit der Gegenkupplungsfläche des betreffenden Arbeitsspindelkopfes 54 in Kontaktberührung gebracht, indem der Hauptspindelkopf 20 entlang der Z-Achse bewegt bzw. verfahren wird.

Zur Durchführung des Ankuppelvorgangs und auch des Abkuppelvorgangs wird dabei die Antriebswelle 40 des Hauptspindelkopfes 20 in einer vorgegebenen Drehlage verriegelt. Es sind dabei Vorkehrungen getroffen, die sicherstellen, daß die Verriegelung beim Abkuppeln eines Arbeitsspindelkopfes 54 erhalten bleibt, bis wieder ein Arbeitsspindelkopf 54 für den nächsten Einsatz angekuppelt ist.

Der Revolverkopf 36 wird aber nicht nur zur Durchführung des jeweiligen An- und Abkuppelvorgangs verriegelt, sondern darüber hinaus auch, damit er den durch den spanenden Bearbeitungsvorgang jeweils verursachten Beanspruchungen Stand halten kann. Er muß bspw. dem Drehmoment widerstehen, wel ches vom Arbeitsspindelkopf 54 her auf den Revolverkopf 36 einwirkt. Von diesen Beanspruchungen muß nämlich in jedem Falle der Antrieb für die C-Achse entlastet werden.

Zur Festlegung des Revolverkopfes 36 relativ zum Hauptspindelkopf 20 ist deshalb gemäß Fig. 3.3 eine besondere Bremsvorrichtung vorgesehen. Diese besteht dabei aus einer innenseitig dünnwandigen Buchse 140, welche im unteren Teil des Hauptspindelkopfes 20 in einem den Revolverkopf 36 umgebenden Bereich angeordnet ist. Diese Buchse 140 weist dabei einen inneren Umfangskanal 142 auf, der mit Hydraulikdruck beaufschlagt werden kann. Dies hat zur Folge, daß die Innenwand der Buchse 140 fest an die äußere Umfangsfläche des Revolverkopfes 36 gepreßt wird und diesen dadurch in der jeweils vorgegebenen Lage bzw. Ausrichtung verriegelt.

In der Zeichnung nicht dargestellt sind die zu dieser Bremsvorrichtung führenden Hydraulikanschlüsse, weil sie am Hauptspindelkopf 20 in jeder geeigneten Art und Weise vorgesehen werden können. Da diese Hydraulikanschlüsse nicht mit der Hohlwelle 30 in Verbindung stehen brauchen sie auch nicht durch die Hohlwelle 30 geführt zu werden.

Eine in der Praxis bewährte Bauart für einen Hauptspindelkopf der vorstehend beschriebenen Ausbildung wird mit einem drehzahl-umschaltbaren, für 125 PS sowie 1150 U/min ausgelegten Gleichstrom-Antriebsmotor betrieben, wobei dessen Antriebsleistung über eine Antriebswelle 40 übertragen wird, welche über den größten Teil ihrer Länge einen Durchmesser von 125 mm aufweist.

Es hat sich gezeigt, daß ein mit einem solchen Antrieb ausgerüsteter Hauptspindelkopf auch dann eine hohe Stabilität aufweist, wenn er relativ zum Maschinenschlitten 22 über seine maximale Länge ausgefahren ist und dabei ein Schneidvorgang mit hohem Drehmoment und niedriger Drehzahl unter Verwendung eines Arbeitsspindelkopfes 54 durchgeführt wird, der für eine starke Drehzahlreduzierung ausgelegt ist.

Für einen solchen Hauptspindelkopf gelten also die für Spindelköpfe herkömmlicher Bauart zutreffenden Lagerbedingungen im Hinblick auf hohe Drehzahlen und leichte Belastung im wesentlichen nicht mehr. Damit ist also eine Spindelkopf-Ausbildung geschaffen, die sich den flexiblen Betriebsbedingungen problemlos anpassen läßt und an der sich die Arbeitsspindelköpfe 54 in einer Art und Weise wechseln lassen, wie sie für automatisierte und numerisch gesteuerte Fräsmaschinen in sogenannten Bearbeitungszentren besonders vorteilhaft ist.

## Ansprüche

1. Mehrachsen- bzw. Universal-Fräsmaschine mit einem Hauptspindelkopf und einem von diesem lösbar und auswechselbar getragenen Arbeitsspindelkopf,

**dadurch gekennzeichnet,**

a) daß der Hauptspindelkopf (20) als Revolverkopf-Schlitten ausgebildet ist und an einem Maschinenschlitten (22, 24) sitzt,

b) daß der Maschinenschlitten (22, 24) in zwei zueinander orthogonalen Richtungen linear beweglich geführt ist und den Hauptspindelkopf (20) wiederum in einer Richtung längsbeweglich trägt, die jeweils rechtwinklig zu seinen eigenen Bewegungsrichtungen orientiert ist;

c) daß im Hauptspindelkopf (20) eine Hohlwelle (30) drehbar gelagert wird, die mit dessen Längsachse fluchtet und an ihrem Ende einen Revolverkopf (36) trägt, dessen Stirnseite eine Kupplungsfläche für den Arbeitsspindelkopf (54) bildet;

d) daß koaxial in der Hohlwelle (36) eine Antriebswelle (40) angeordnet und an ihrem hinteren, vom Revolverkopf (36) abgewendeten Ende mit einem Antriebsmotor (43) verbunden ist;

e) daß die Antriebswelle (40) an ihrem dem Revolverkopf (36) benachbarten Ende eine dessen Kupplungsfläche zugeordnete Kupplungsvorrichtung (46, 48) trägt;

f) daß der Arbeitsspindelkopf (54) im Bereich seiner der Kupplungsfläche des Revolverkopfes (36) zugeordneten Gegenkupplungsfläche eine Gegenkupplungsvorrichtung (50, 52) zur Antriebswelle (40) des Hauptspindelkopfes (20) aufweist,

g) daß der Kupplungsfläche des Revolverkopfes (36) mehrere um seine Drehachse gleichmäßig verteilt angeordnete, lösbare Greifervorrichtungen (82) zugeordnet sind;

h) daß die Gegenkupplungsfläche des Arbeitsspindelkopfes (54) mehrere den Greifervorrichtungen (82) des Revolverkopfes (36) zugeordnete und von diesem erfaßbare Arretierknöpfe (90) trägt;

i) und daß auf dem Hauptspindelkopf (20) ein Stellmotor (66) montiert ist, der einen Drehantrieb (60) für den Revolverkopf (36) und den jeweils mit diesem lösbar gekuppelten Arbeitsspindelkopf (54) bildet.

2. Mehrachsen- bzw. Universal-Fräsmaschine nach Anspruch l,

**dadurch gekennzeichnet,**

daß die Hohlwelle (30) bzw. der Revolverkopf (36) mindestens einen weiteren Stellmotor (97) trägt, durch den eine parallel zur Drehachse des Revolverkopfes (36) angeordnete und in diesem drehbar gelagerte Welle antreibbar ist, welche wiederum eine der Kupplungsfläche des Revolverkopfes zugeordnete Kupplungsvorrichtung (96) hat,
und daß im Arbeitsspindelkopf (54) eine zugehörige Welle mit einer komplementären Gegenkupplungsvorrichtung (98) sitzt, über die der Arbeitsspindelkopf (54) für eine Bewegung in seiner fünften Achse antreibbar ist.

3. Mehrachsen- bzw. Universal-Fräsmaschine nach einem der Ansprüche 1 und 2,

**dadurch gekennzeichnet,**

daß der Revolverkopf (36) an seiner Kupplungsfläche mit Elektro- und Druckmittel-Kupplungselementen (136, 138) versehen ist, denen komplementäre Gegenkupplungselemente (136′, 138′) an der Gegenkupplungsfläche des Arbeitsspindelkopfes (54) zugeordnet sind,
daß die Greifervorrichtungen (82) des Revolverkopfes (36) über elektrisch ansteuerbare Hydraulik-Ventile betätigbar sind,
daß die Druckmittelzuführung zum Revolverkopf (36) durch zwischen der Hohlwelle (30) und dem Hauptspindelkopf (20) eingebaute Drehmuffen-Vorrichtungen (100) gebildet ist,
und daß zur Übertragung der elektrischen Energie Schleifring- und Bürsteneinrichtungen (124) zwischen der Hohlwelle (30) und dem Hauptspindelkopf (20) angeordnet sind.

4. Mehrachsen- bzw. Universal-Fräsmaschine nach einem der Ansprüche 1 bis 3,

**dadurch gekennzeichnet,**

daß dem Hauptspindelkopf (20) mehrere verschiedene Arbeitsspindelköpfe (54) zugeordnet sind (Fig. 2),
daß diese Arbeitsspindelköpfe (54) für verschiedene, insbesondere aufeinanderfolgende, Bearbeitungsvorgänge wechselweise mit dem Hauptspindelkopf (20) kuppelbar sind,
daß der Hauptspindelkopf (20) im Maschinenschlitten (22, 24) mit seinem Revolverkopf relativ zu den Arbeitsspindelköpfen (54) in und außer Kuppelstellung fahrbar ist,
daß dabei der Revolverkopf (36) mit seinen Kupplungsvorrichtungen relativ zu den Gegenkupplungsvorrichtungen des jeweiligen Arbeitsspindelkopfes (54) dreheinstellbar und ausrichtbar ist,
daß in der Kuppelstellung die Greifervorrichtungen (82) des Revolverkopfes (36) relativ zu den Arretierknöpfen (90) des Arbeitsspindelkopfes (54) wahlweise ein- und ausrückbar sind,
während sämtliche Kupplungs- und Gegenkupplungsvorrichtungen (48, 50 bzw. 96, 98) und auch sämtliche Elektro-und Druckmittel-Kupplungselemente (136, 136′; 138, 138′) selbstkuppelnd ausgestaltet sind.

5. Mehrachsen- bzw. Universal-Fräsmaschine nach einem der Ansprüche 1 bis 4,
**gekennzeichnet durch,**
jeweils asymmetrisch an der Kupplungsfläche des Revolverkopfes und an der Gegenkupplungsfläche des Arbeitsspindelkopfes (54) sitzende Ausricht- und Führungselemente (92, 94), die einer vorbestimmten Relativ-Drehlage zwischen Revolverkopf (36) und Arbeitsspindelkopf (54) zugeordnet sind.

6. Mehrachsen- bzw. Universal-Fräsmaschine nach einem der Ansprüche 1 bis 5,
**dadurch gekennzeichnet,**
daß der Revolverkopf (36) mit vier symmetrisch zu seiner Kupplungsfläche eingebauten Greifervorrichtungen (82) versehen ist, während er drei Ausricht- und Führungselemente (92) trägt und dabei die drei Ausricht-und Führungselemente (92) im Bereich von drei der vier Greifervorrichtungen (82) angeordnet sind.

7. Mehrachsen- bzw. Universal-Fräsmaschine nach einem der Ansprüche 1 bis 6,
**dadurch gekennzeichnet,**
daß die die Kupplungsvorrichtung (96) und die Gegenkupplungsvorrichtung (98) aufweisenden sowie dem Stellmotor (97) zugeordneten Wellen jeweils auf der Winkelhalbierenden zwischen zwei benachbarten Greifervorrichtungen (82) bzw. Arretierknöpfen (90) liegen, während die Kupplungselemente (136, 138) und Gegenkupplungselemente (136′, 138′) in einer zusammengefaßten Gruppe verteilt wiederum im Bereich zwischen zwei Greifervorrichtungen (82) bzw. Arretierknöpfen (90) liegen.

FIG. 1

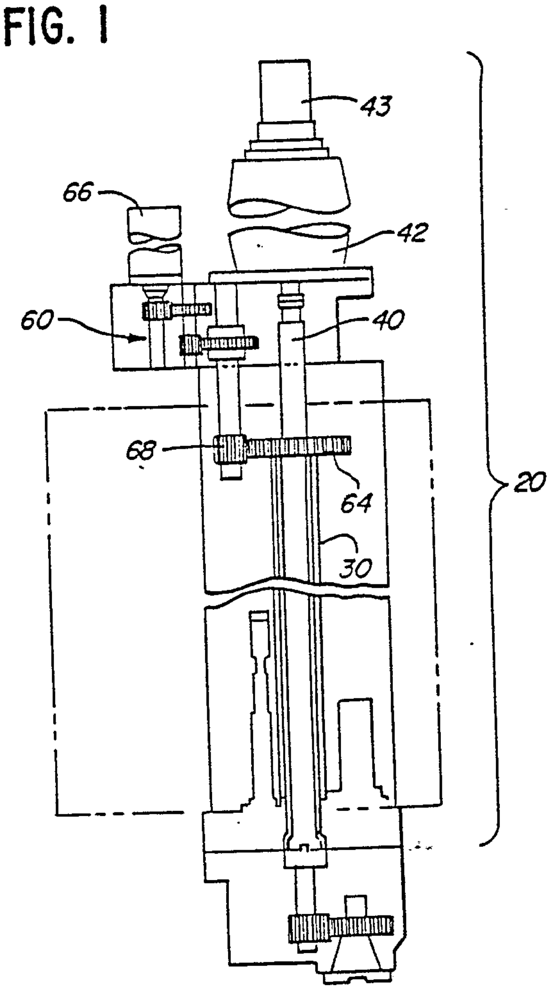


FIG. 2

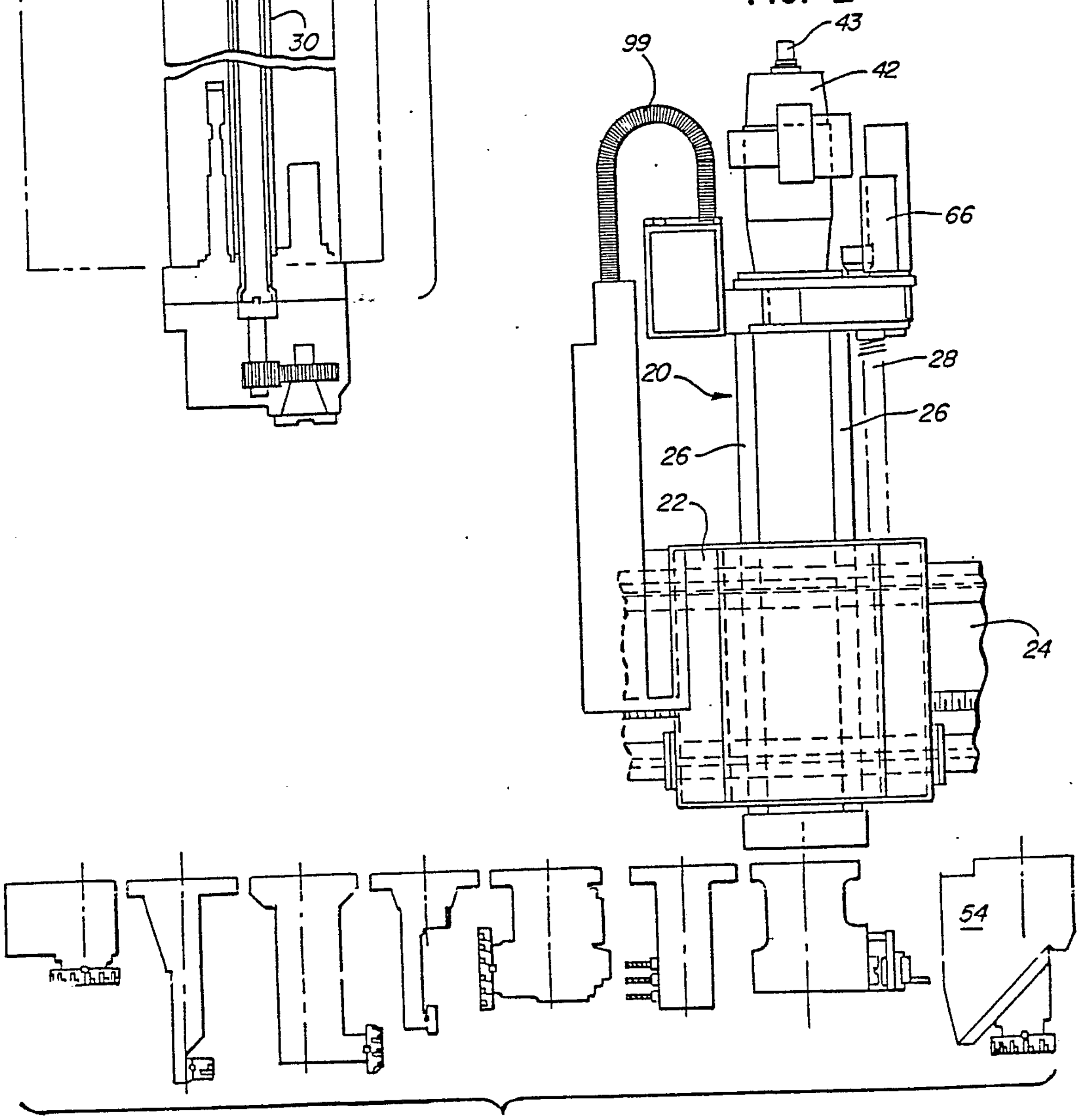

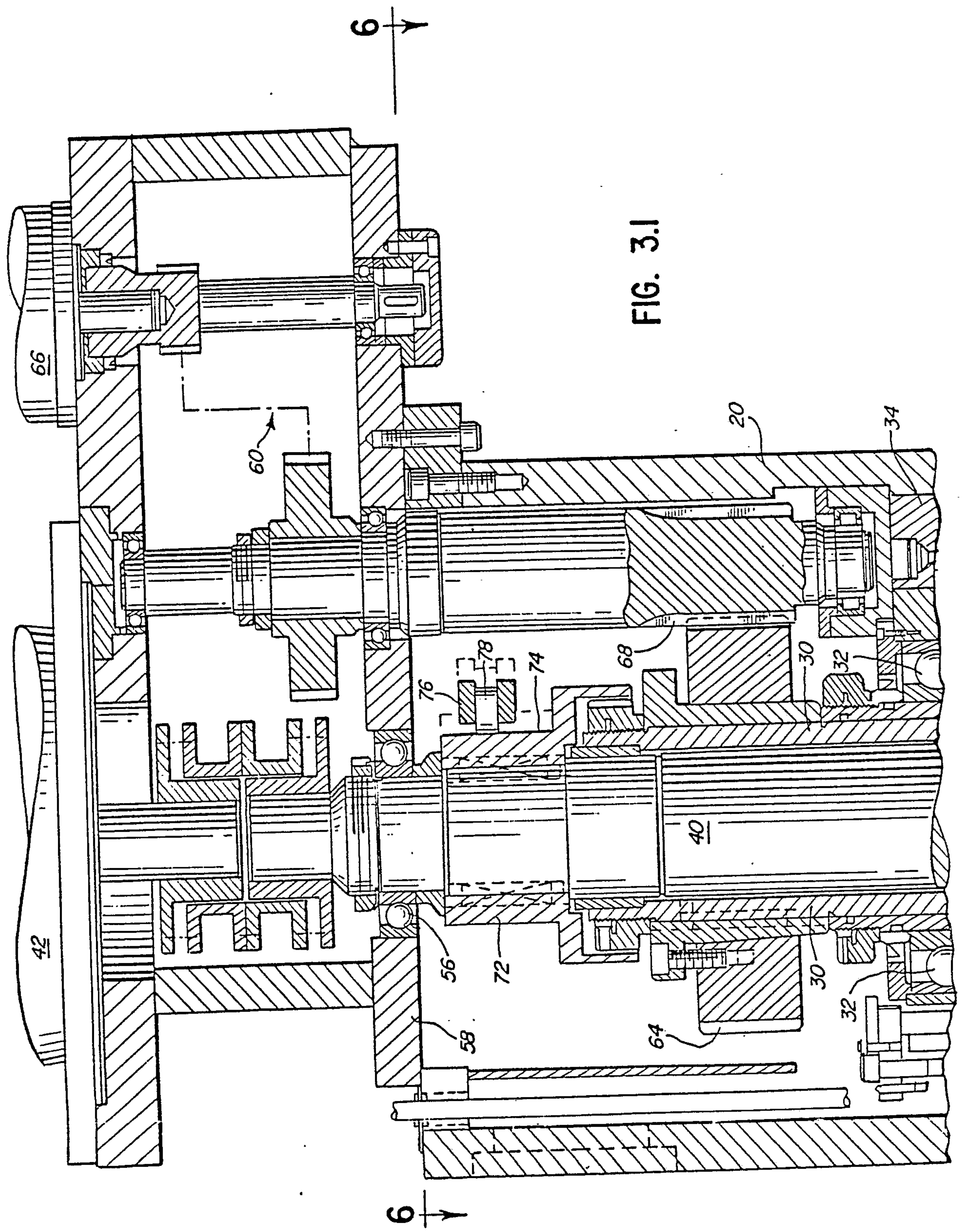


FIG. 3.1

FIG. 3.2

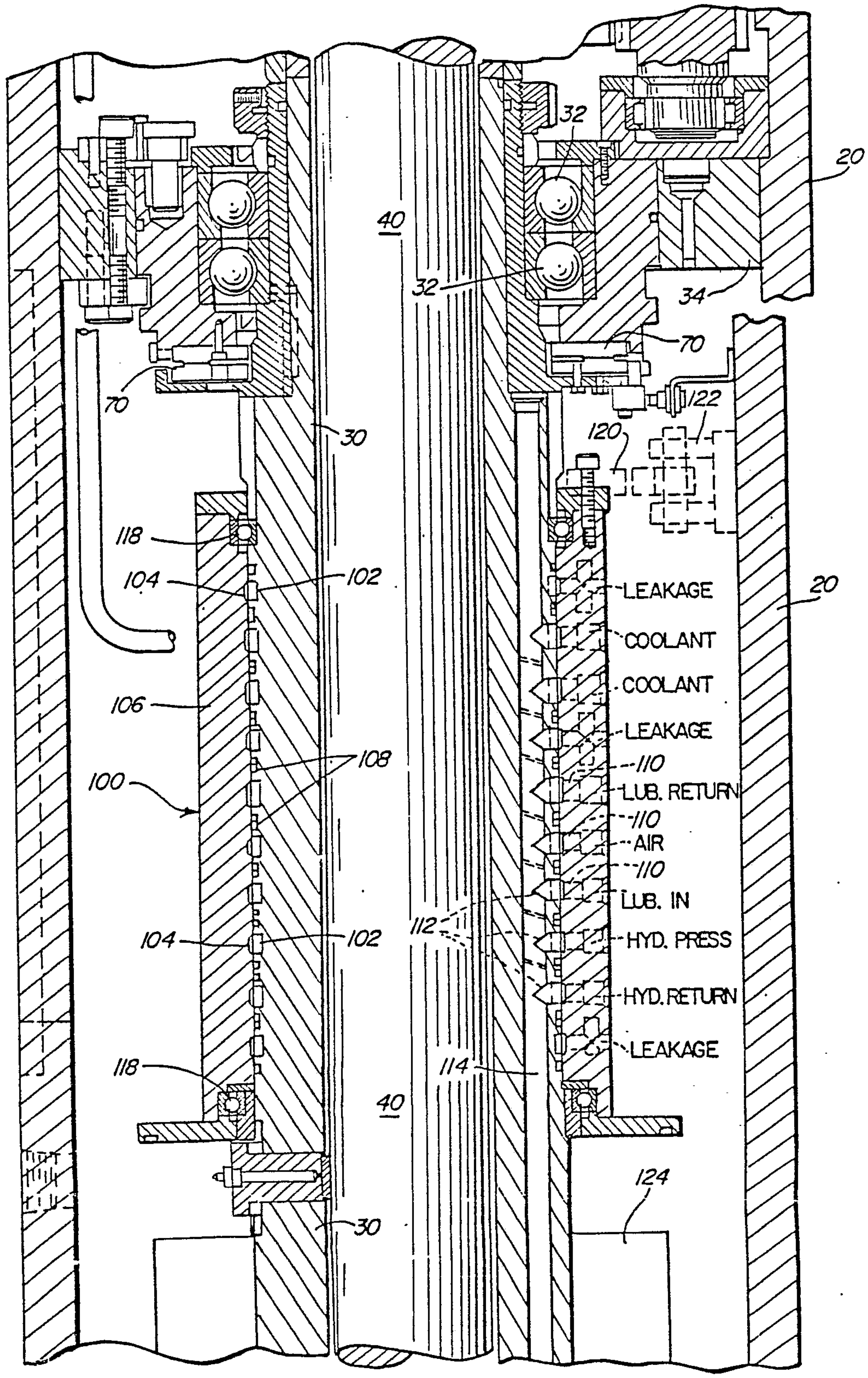
32
20
40
32
34
70
70
30
120
122
118
104
102
LEAKAGE
20
COOLANT
COOLANT
106
LEAKAGE
110
108
100
LUB. RETURN
110
AIR
110
LUB. IN
112
104
102
HYD. PRESS
HYD. RETURN
LEAKAGE
114
118
40
124
30

FIG. 3.3

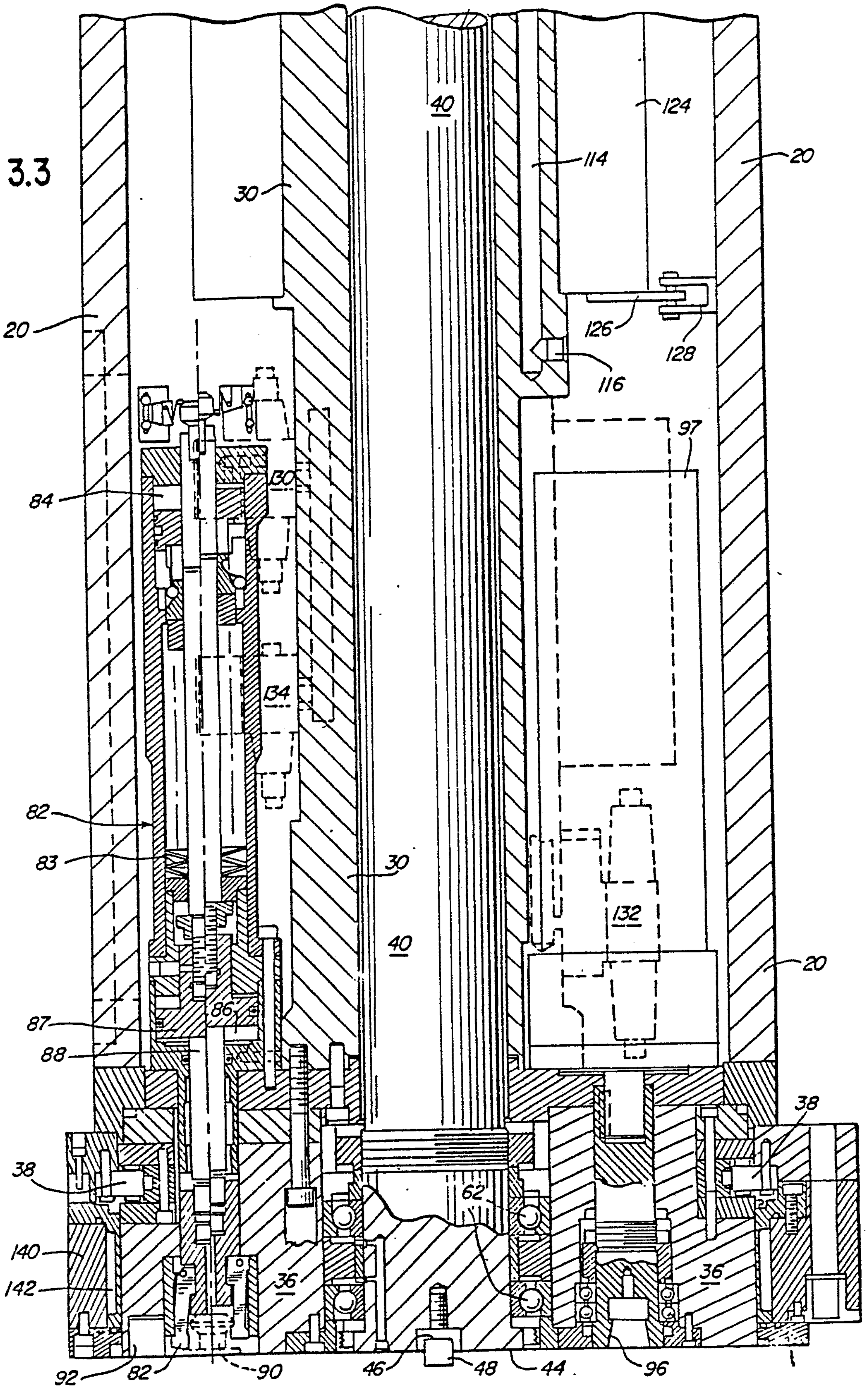
40
124
114
20
30
20
126
128
116
97
84
130
134
82
83
30
132
40
20
87
86
88
38
38
62
140
36
36
142
92
82
90
46
48
44
96

FIG. 4

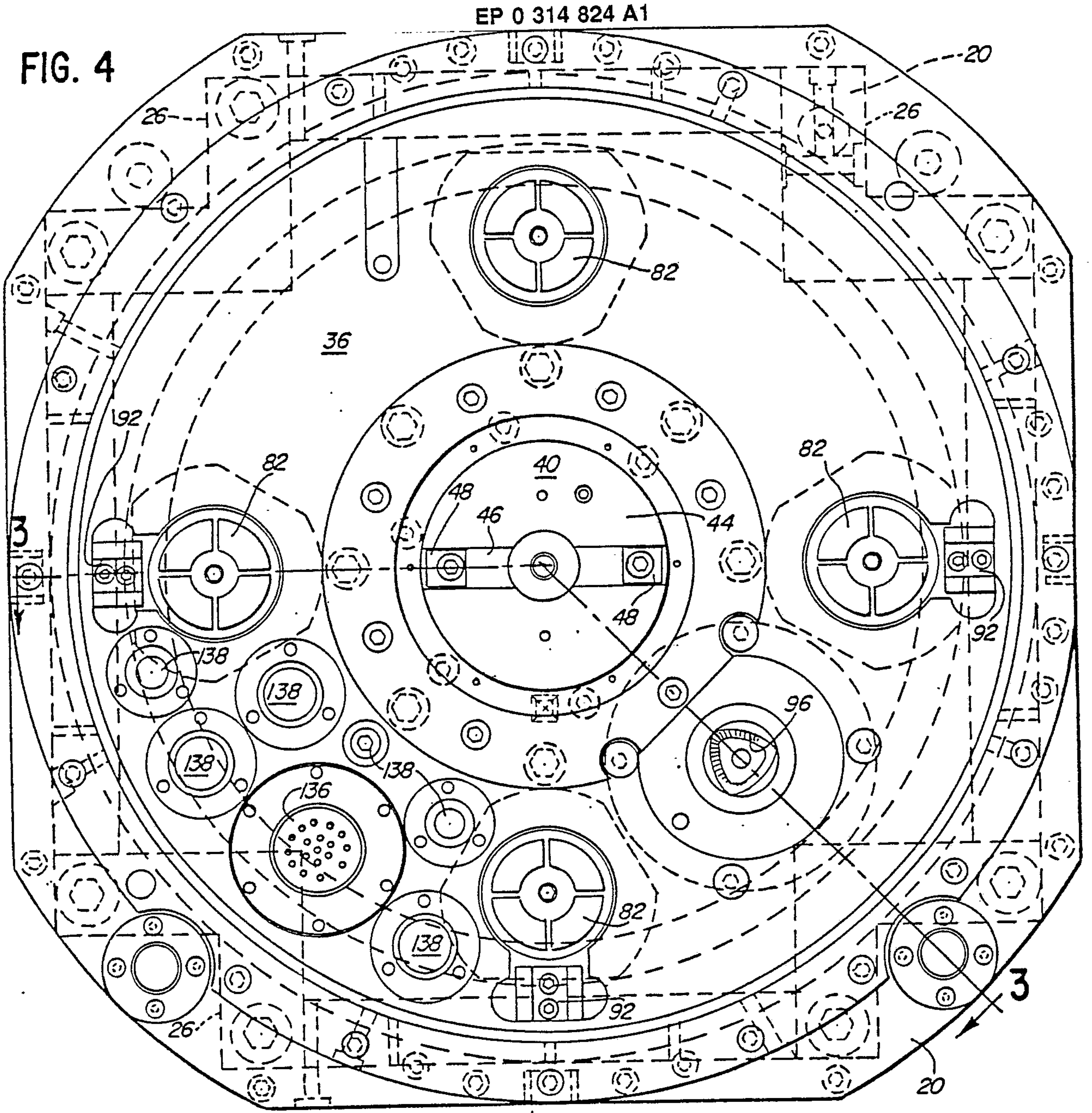
20
26
26
82
36
92
82
40
48
46
44
82
3
48
92
138
138
138
96
138
136
82
138
92
26
3
20

FIG. 5

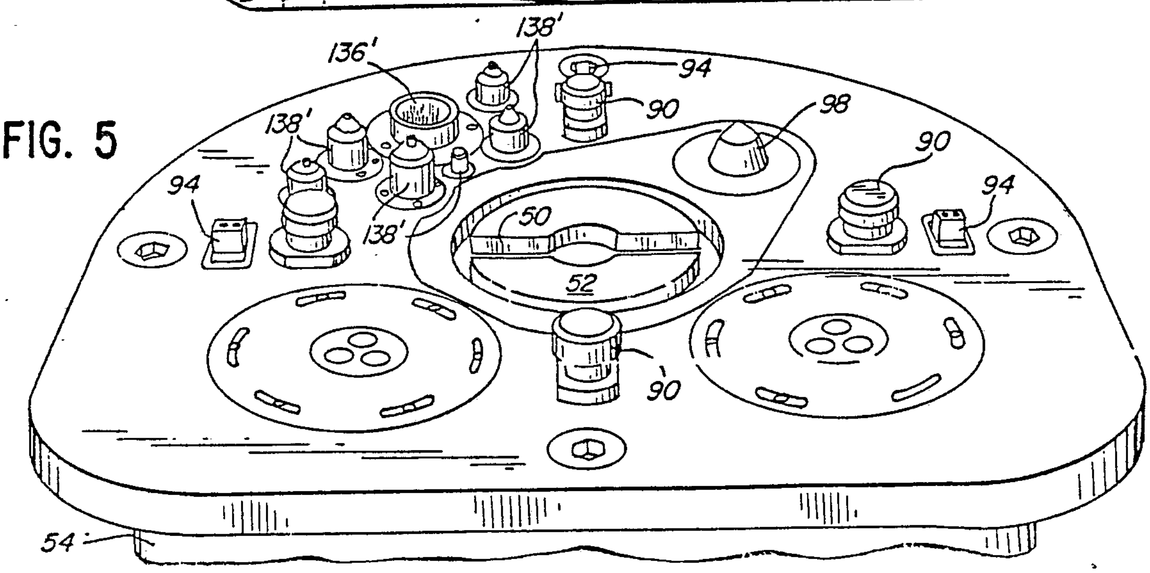
138'
136'
94
90
138'
98
90
94
94
50
138'
52
90
54

FIG. 6

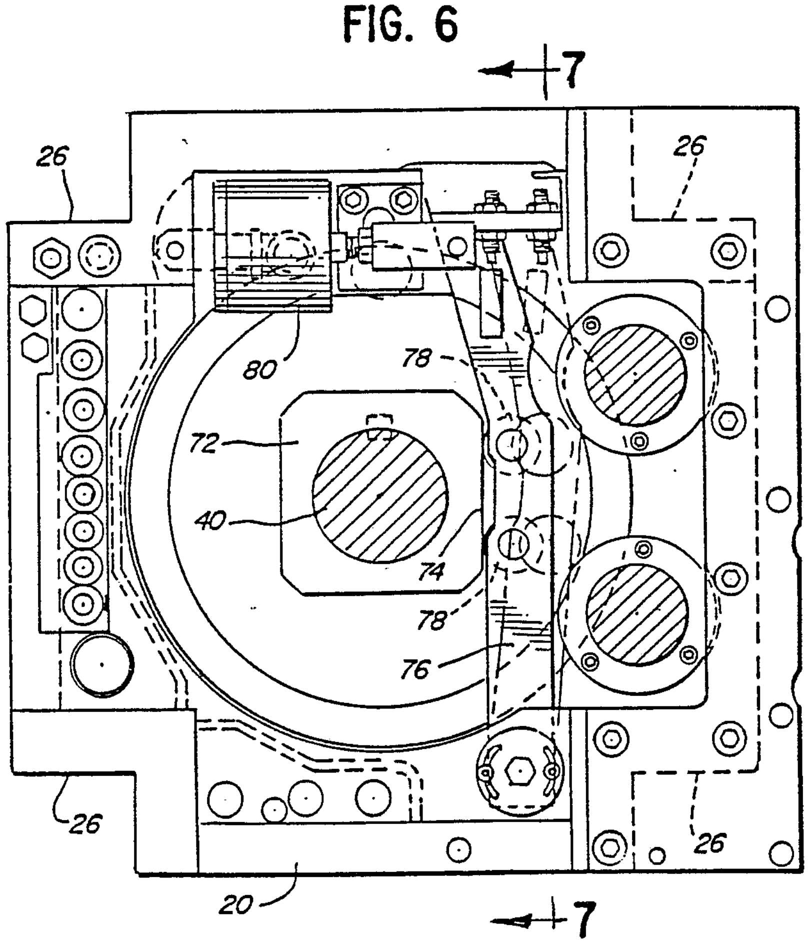


FIG. 8

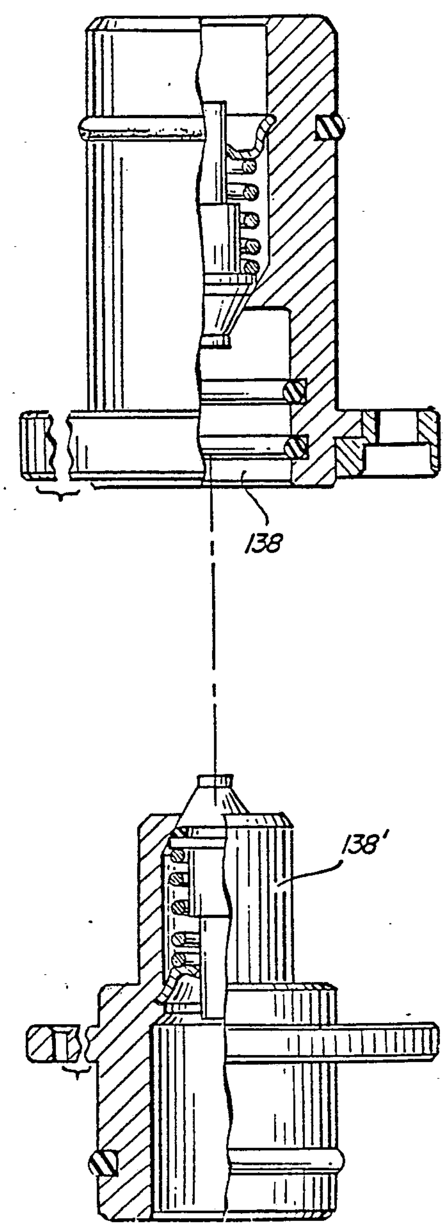


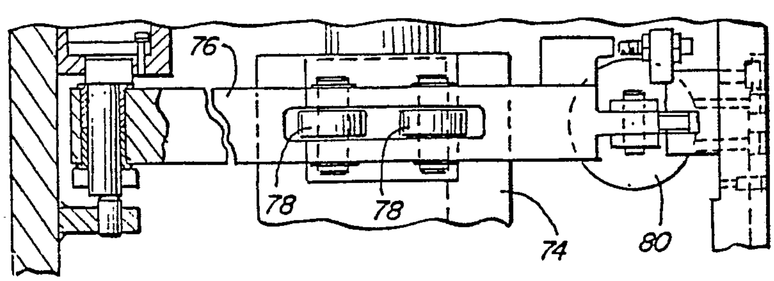


FIG. 7

Europäisches Patentamt

# EUROPÄISCHER RECHERCHENBERICHT

Nummer der Anmeldung

EP 87 11 6139

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 212 875 (SCHIESS AG)<br>* Ansprüche 11-14 *<br>--- | 1,4 | B 23 Q 3/12 |
| A | US-A-4 649 610 (HIKARU ONISHI)<br>--- | 1 | |
| A | FR-A-2 258 241 (DEFLANDRE)<br>--- | 1 | |
| A | DE-A-3 151 532 (LICENTIA)<br>----- | 1,3 | |

RECHERCHIERTE SACHGEBIETE (Int. Cl.4)

B 23 Q

Der vorliegende Recherchenbericht wurde für alle Patentansprüche erstellt

| Recherchenort | Abschlußdatum der Recherche | Prüfer |
|---|---|---|
| DEN HAAG | 01-07-1988 | DE GUSSEM J.L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)